# EUROPEAN PATENT APPLICATION

(11) **EP 3 402 153 A1**
(43) Date of publication of application: **14.11.2018**
(21) Application number: 17170903.3
(22) Date of filing: 12.05.2017
(51) Int. Cl.: H04L 29/06, G06F 21/56, G06F 21/53, G06Q 10/06, G06F 9/455

(54) **CLOUD INFRASTRUCTURE VULNERABILITIES ASSESSMENT BACKGROUND**

(71) Applicant: Nokia Solutions and Networks Oy, 02610 Espoo (FI)
(72) Inventor: MENSAH, Pernelle, 91620 Nozay (FR); DUBUS, Samuel, 91620 Nosay (FR); KANOUN, Waël, 91620 Nozay (FR)
(74) Representative: Cabinet Camus Lebkiri

(57) **Abstract**

There is described a method of assisting a prospective client in evaluating exploitation vulnerabilities of a cloud infrastructure. The invention proposes ways for providing threat indicators contextualized to a specific infrastructure and to the specific profile of a prospective client so that these indicators can be leveraged by the prospective client before an hypothetical deployment of virtual infrastructures from this client on the cloud infrastructure.

## Description

### BACKGROUND

### Technical Field

The present invention generally relates to cloud infrastructure vulnerabilities assessment method, more specifically it relates to a method of assisting a prospective client in evaluating exploitation vulnerabilities of a cloud infrastructure.

It finds application, in particular, in the domain of cloud platforms where potential clients can be helped in their decision-making process of choosing one provider over another, and of finding ways to mitigate such vulnerabilities when encountering them.

### Related Art

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Security is a critical issue for potential clients (customers) considering migrating their data infrastructure to the Cloud. However, metrics regarding the security level of a cloud infrastructure are rarely provided by cloud service providers to their prospective clients, even though they would provide valuable information. Indeed, it is difficult both for a potential client or for a cloud service provider to mitigate the vulnerabilities of a cloud infrastructure because of limited resources, software version constraints or the need for activity continuity. Therefore, making such information available to a prospective client who is in a decision-making process of choosing one cloud platform over another, would bring a significant marketing advantage to any cloud service provider.

In that context, cloud service providers would have advantage to be able to present to prospective clients relevant data such as the most exploited vulnerabilities associated to the specific profile of the prospective client as well as customized indicators on the threat exposure associated to the use of their particular cloud platform.

In the existing art, there are known Threat Intelligence Platforms (TIP) which provide a common habitat wherein multiple sources can share threat data from multiple sources and of different formats, and allow organizations to aggregate, correlate and analyse these data. In particular, thanks to these TIPs, users can contextualize and prioritize threats.

However, the data that are aggregated and exploited by the platforms come from a plurality of sources including external sources and communities of users on a global scale. This implies that a lot of the data exploited/processed by these TIPs are not actually relevant with respect to a specific client. In other words, obtaining threats indicators concerning the specific profile of a given, unique client makes it necessary to process a lot of noisy (*i.e.,* not relevant) information.

### SUMMARY

The invention aims to remedy all or some of the disadvantages of the above identified prior art. It particularly proposes ways for providing threat indicators contextualized to a specific infrastructure and to the specific profile of a prospective client so that these indicators can be leveraged by the prospective client before an hypothetical deployment of virtual infrastructures from this client on the cloud infrastructure.

To address these needs, a first aspect of the present invention relates to a method of assisting a prospective client in evaluating exploitation vulnerabilities of a cloud infrastructure, said vulnerabilities corresponding to threats to which said prospective client would be exposed by deploying a client's virtual infrastructure, including at least one client's virtual machine, on said cloud infrastructure, said method comprising:
- collecting information characterizing each one of a plurality of virtual machines already deployed on the cloud infrastructure, said information including at least an operating system, a type of instruction set of the processor executing the operating system, and services as well as associated service versions and service categories;
- establishing first profiles of the already deployed virtual machines based on the collected information, said first profiles comprising active service profiles and/or installed application profiles;
- collecting alerts triggered by attacks against the already deployed virtual machines and generated by at least one intrusion detection and prevention system;
- sorting the collected alerts based on information related to said alerts as generated by the intrusion detection and prevention system;
- associating the collected alerts with the first profiles of the already deployed virtual machines targeted by attacks from which said alerts have been triggered, by matching elements of said first profiles with the information related to the alerts;
- establishing second profiles of at least one client's virtual machine which is intended to be deployed by the prospective client on the cloud infrastructure, said second profiles comprising active service profiles and/or installed application profiles;
- establishing output information useful to the prospective client for evaluating the vulnerabilities of the cloud infrastructure with respect to the client's virtual infrastructure expected to be deployed on said cloud infrastructure, by retrieving alerts associated to first profiles similar to the second profile and processing said associated alerts;
- delivering said output information to the prospective client.

The method thus allows delivering tailored statistics and recommendations for indicating potential threats that the prospective client could encounter, based on the characteristics of the infrastructures, services and applications intended to be deployed by said prospective client on the cloud infrastructure. More specifically, the method allows for a more focused approach for gathering and analyzing information related to the threats and the vulnerabilities of the cloud architecture by restricting the scope of the assessment to the cloud environment considered. Thus, the information that is irrelevant to the purpose of the assessment is not considered from the very beginning of the assessment process. Hence, the proposed method provides prospective clients with actionable statistics for improving their security in the context of a chosen cloud platform (namely infrastructure) of a given cloud service provider.

According to various embodiments, such method comprises one or more of the features below, which should be considered in any possible technical combinations:
- the output information comprises at least some of personalized statistics, personalized recommendations, indications as to how to mitigate said vulnerabilities, and suggestions of alternative applications and/or alternative services less impacted by vulnerabilities of the cloud infrastructure.
- the alerts are expressed in an alert format comprising at least some of:
   - a unique identifier;
   - a virtual machine identifier in the cloud;
   - a client identifier;
   - a timestamp;
   - a service identifier;
   - a service version; and,
   - an exploited attack of vulnerability identifier.
- the at least one intrusion detection and prevention system is installed in the cloud architecture by the prospective client.
- the at least one intrusion detection and prevention system is installed in the cloud architecture by the cloud provider.
- establishing first profiles of the already deployed virtual machines comprises:
   - organizing the virtual machines in initial clusters according to their respective operating systems and type of instruction sets of the processors executing the operating systems;
   - processing each said initial cluster using a clustering method that outputs, for each initial cluster, sets of outputted clusters based on active services and installed applications; and,
   - processing said outputted clusters using a Frequent Item Set (FIS) mining method based successively on the active services and on the installed applications associated with the client's virtual machines.
- the clustering method being used to process each initial cluster comprises:
   - formatting the virtual machines into an exploitable dataset by associating one vector to each virtual machine (VM), each column of the vector representing a service or an application; and,
   - applying on said exploitable dataset a clustering algorithm being either a K-mean or a HCPC algorithm.
- the FIS mining method used to process the outputted clusters comprises:
   - defining each outputted cluster as a cluster entity; and,
   - associating each virtual machine within each cluster entity with two classes of transactions: active services transactions or installed applications transactions wherein items of the method are respectively active services and installed applications.
- the FIS mining method is performed by using a Frequent Pattern Growth algorithm.
- the elements of the first profiles which are matched with the information related to the alerts for associating said alerts with said first profiles comprise at least services and/or applications.
- the user profile of the prospective client corresponding to at least infrastructures and applications intended to be deployed by said prospective client comprises virtual machines and is retrieved after said prospective client has either:
   - built said virtual machines by using options offered by a cloud provider of said cloud infrastructure; or,
   - provided images of said virtual machines to be deployed to the provider.
- the personalized statistics of the output information at least comprise:
   - the mean time before an attack attempt on the virtual infrastructure associated to the specific profile of the prospective client;
   - the mean time before an attack compromise this virtual infrastructure;
   - the exploitation rate of vulnerabilities with regards to the specific profile;
   - the vulnerabilities with the highest rate of exploitation with regards to the specific profile.

A second aspect of the invention relates to a device for assisting a prospective client in evaluating exploitation vulnerabilities of a cloud infrastructure, said vulnerabilities corresponding to threats to which said prospective client would be exposed by deploying a client's virtual infrastructure, including at least one client's virtual machine, on said cloud infrastructure, said device comprising at least one monitor agent, an alerts correlator, a virtual machine profiler, an alerts to profile classifier, a client interface, an analysis module and a database adapted to perform the following:
- collecting information characterizing each one of a plurality of virtual machines already deployed on the cloud infrastructure, said information including at least an operating system, a type of instruction set of the processor executing the operating system, and services as well as associated service versions and service categories;
- establishing first profiles of the already deployed virtual machines based on the collected information, said first profiles comprising active service profiles and/or installed application profiles;
- collecting alerts triggered by attacks against the already deployed virtual machines and generated by at least one intrusion detection and prevention system;
- sorting the collected alerts based on information related to said alerts as generated by the intrusion detection and prevention system;
- associating the collected alerts with the first profiles of the already deployed virtual machines targeted by attacks from which said alerts have been triggered, by matching elements of said first profiles with the information related to the alerts;
- establishing second profiles of at least one client's virtual machine which is intended to be deployed by the prospective client on the cloud infrastructure, said second profiles comprising active service profiles and/or installed application profiles;
- establishing output information useful to the prospective client for evaluating the vulnerabilities of the cloud infrastructure with respect to the client's virtual infrastructure expected to be deployed on said cloud infrastructure, by retrieving alerts associated to first profiles similar to the second profile and processing said associated alerts;
- delivering said output information to the prospective client.

In embodiments of the device, taken either alone or in combination:
- the device is further configured to perform the following:
   - establishing categories profiles associated to first profiles containing categories of installed applications and/or active services corresponding to installed applications and active services comprised in said first profiles;
      - when building the user profile, the prospective client has either:
      - chosen within installed applications and/or active services having their categories already defined by the cloud provider; or,
      - provided the categories of the installed applications and/or active services to the cloud provider.
   - when establishing output information by retrieving alerts associated to first profiles similar to the second profile:
      - only retaining first profiles based on predetermined conditions on statistics corresponding to them; and,
      - proposing installed applications and/or active services comprised in the retained first profiles to the prospective client.

Finally, a third aspect of the invention proposes a computer program product comprising one or more stored sequences of instructions that are accessible to a processor and which, when executed by the processor, cause the processor to carry out the any of the steps of the method.

### BRIEF DESCRIPTION OF THE DRAWINGS

Embodiments of the present invention are illustrated by way of example, and not by way of limitation, in the figures of the accompanying drawings, in which like reference numerals refer to similar elements and in which:
- Figure 1 is a functional blocks description of an embodiment of a method according to the claimed invention.
- Figure 2 is a flow chart presenting an embodiment of the steps of the method according to the embodiments of the proposed method.
- Figure 3 is a functional blocks description of an embodiment of a device according to the claimed invention.

The same reference number represents the same element or the same type of element on all drawings, unless stated otherwise.

### DESCRIPTION OF PREFERRED EMBODIMENTS

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

In the following description, well-known functions or constructions by the man skilled in the art are not described in detail since they would obscure the invention in unnecessary detail.

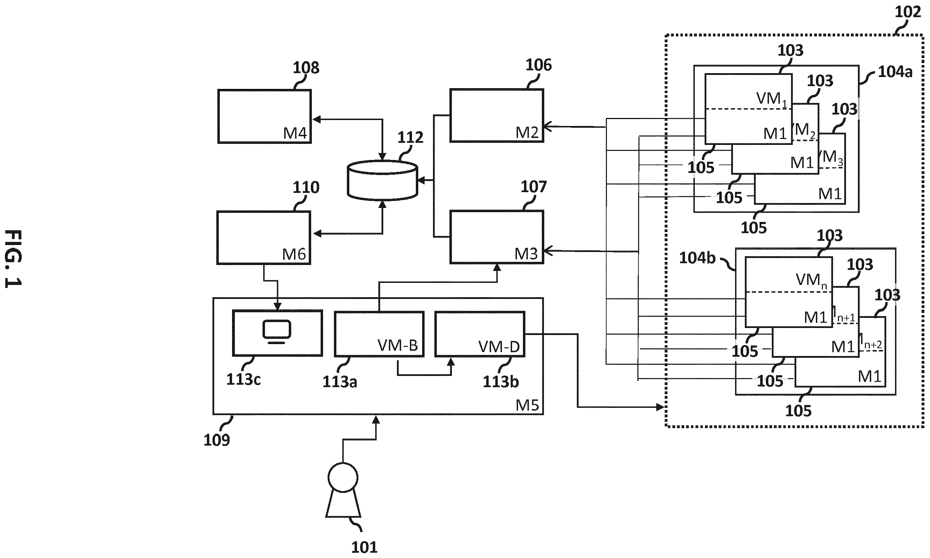

Referring to Figure 1, there is shown therein a functional block diagram illustrating exemplary embodiments of the invention. In these non-limiting examples, six different modules form the core of the proposed solution and cooperate to achieve the goal of delivering output results, for instance comprising statistics and recommendations indicating contextualized threats associated to the profile of a prospective client wishing to assess the vulnerabilities of a cloud infrastructure.

The prospective client 101 is assumed to be a customer wishing to evaluate the potential threats and vulnerabilities of the cloud infrastructure of a given cloud service provider. This can be achieved, in particular, by leveraging the cloud infrastructure 102 of the cloud service provider. This cloud infrastructure 102 typically contains a plurality of already deployed virtual machines 103, belonging to already registered clients 104a and 104b of the cloud service provider.

The first module may be comprised of a plurality of monitoring agents 105 being attached to each one of the virtual machines (VMs) 103 of the cloud infrastructure 102. These agents are configured to collect information identifying, *inter alia,* the operating systems, the type of instruction set of processors executing the operating systems, the services (and corresponding service versions and service categories) installed on the VMs. This information individually characterizes each VM and can be used to define their profiles. To that end, such information once collected is sent to the second module 106 which shall be described hereinbelow.

The monitoring agents 105 forming the first module are also configured to collect and aggregate alerts generated by one or more intrusion detection and prevention systems (IDS/IPS). Such alerts can be triggered by attacks against specific VM.

Such IDS/IPS can be systems which have been previously deployed in the cloud architecture 102 by the cloud provider. In embodiments, however, alternatively to being deployed by the cloud provider to evaluate its own infrastructure, the used IDS/IPS can be a system deployed by the customer, namely the prospective client, for the purpose of carrying out the assessment of the vulnerabilities of the cloud architecture and possibly providing the results to the cloud provider. For instance, it can be a proprietary system, or a customized system. Thus, the customer can have more confidence in the results of the assessment. This implies that the IP addresses and other virtual machines identifiers can be assigned differently depending on the context in which the used IDS/IPS have been deployed.

The generated alerts can exhibit different formats including, for instance, the Intrusion Detection Message Exchange Format (IDMEF). These formats comprise, for instance, one or more of the following: a unique identifier, a virtual machine identifier, a client identifier, a timestamp, a service identifier, a service version, and identifiers of exploited attacks or vulnerabilities.

Whatever the format of the alerts, it can be used to derive output information including one or more of the following: the vulnerabilities effectively exploited in the environment during an attack and leading to a compromise, the attempts at exploiting some vulnerabilities present in the system, the mean time to compromise the integrity of a virtual infrastructure and the mean time to trigger the alert. Before doing so, the alerts are collected and sent to the third module 107 described hereinafter.

In some embodiments, the data collected by the monitoring agents 105 can be tagged with identifiers pertaining to the owner of the VM and to the VM itself so that they can be traced, if needed. These identifiers can, for instance, be IP addresses provided that they are unique across the whole cloud provider architecture.

The second module 106 is an alerts correlating and enrichment module whose function is to sort the alerts previously collected by the first module. This sorting of the alerts comprises excluding false positives and identifying attacks that did actually occur. It is worth noting that, as far as data from IDS/IPS are exploited to that end, it is preferable that said IDS/IPS have been deployed by the provider since referring to a unique context with consistent information allows for identifying more relevant correlation between alerts.

The third module 107 can be a virtual machine profiler which is used to establish profiles of the deployed VMs 103 already present in the cloud infrastructure 102. According to embodiments, two categories (or classes) of profiles can be considered, namely: active service profiles and installed application profiles. In other words, the technical function of this module is to generate a list of active services profiles and installed application profiles characterizing each of the monitored VMs.

According to embodiments, this task can be performed as followed:
- firstly, by organizing the already deployed VMs in clusters base on their operating systems and type of instructions sets of the processors executing them.
- secondly, by processing these clusters with a method delivering new clusters based on the actives services and installed applications.
- finally, by processing the clusters outputted by the aforementioned method using, for instance, the well-known Frequent Item Set (FIS, see Mining of Massive Datasets, J. Leskovec et al, Cambridge University Press, chapter 6, 2014) mining method based, successively on the active services and on the installed applications associated with the VMs, respectively. This last step allows to determine the most frequent services and applications in each cluster.

The method involved in the processing of the initial clusters and outputting new clusters, can be, for instance, based on the formatting of the VMs into an exploitable dataset by associating one vector to each VMs and by applying clustering algorithms to these datasets such as, for instance, K-mean (MacQueen, J. Some methods for classification and analysis of multivariate observations. Proceedings of the Fifth Berkeley Symposium on Mathematical Statistics and Probability, Volume 1: Statistics, 281--297, University of California Press, Berkeley, Calif., 1967) or HCPC (Husson, F., Josse, J., & Pages, J. (2010). Principal component methods-hierarchical clustering-partitional clustering: why would we need to choose for visualizing data. Applied Mathematics Department) algorithms.

In that configuration, each column of the vector associated to VMs represent a service or an application and a 1 value represents the presence in the VM of the service or application corresponding to the column, and a 0 value represents the absence of the corresponding service or application in the VM.

In this embodiment, the FIS mining method is used to process the clusters outputted by the above-mentioned methods. As noted, the FIS mining method is a known method (notably in the context of e-commerce environments) which can be adapted to the context on the proposed embodiments.

In particular, the method can be, as an exemplary embodiment, executed according to the following scheme:
- group of machines are defined, by the VMs within the clusters outputted by the clustering algorithm;
- each VM is associated with two classes of so-called transactions (with reference to known FIS mining method): active services transactions or installed applications transactions wherein the items are respectively active services and installed applications;

This last action allows to get a list of transactions pertaining to entities of interest. The number of virtual machines in each cluster entity depends the similarities between machines.

In addition, the FIS mining method can be performed using the known Frequent Pattern Growth (FPG) algorithm (FP-Growth, see Han, J. et al, Mining frequent patterns without candidate generation. Proceedings of the 2000 ACM SIGMOD international conference on management of data, Volume 29, Issue 2, 1-12, June 2000), to the extent that this algorithm is more efficient than variants such as *apriori* algorithm.

This FPG algorithm can be applied to each user entity, still in a two-step process namely, firstly on the active services transactions and then on the installed application transactions. It outputs both the most frequent and largest set of actives services and the most frequent and largest set of installed applications of the entity to which it is applied. A parameter can possibly be adjusted by the cloud service provider in order to adapt the prevalence of the final sets across the initial transactions. Such an embodiment allows to increase or decrease the number of sets obtained after running the algorithm. In the end, each set obtained corresponds either to an active service profile or to an installed applications profile.

After the realization of the aforementioned two-step process, and after potentially suppressing redundant profiles, the list of active service profiles and of installed application profiles is obtained.

Both sorted alerts emerging from the second module 106 and VM profiles emerging from the VM profiler 107 can be stored in a database 112 from which each module can retrieve relevant information when needed.

This is the case, for example, for the fourth module 108 which can be regarded as an alert to profile classification module. This module has the function of associating each alert to one or several profiles according to the active services and/or installed applications present in the profile and which are concerned by any considered alert. For instance, an alert concerning the HTTP service can be associated with all the profiles which contain that service. After retrieving the needed data to operate its function from the database 112, the fourth module 108 can store the results of its operations back in the same database 112.

The fifth module 109 is a client interface which includes three sub-blocks each having specific functions as detailed in what follows. The client interface 109 is an element by which the client 101 interacts with the cloud infrastructure 102, provides data regarding its specific profile/requirements (the client can configure the options related to the virtual infrastructures he wishes to deploy), and eventually deploy VMs once he has chosen a specific cloud infrastructure. Each of the three sub-blocks of the module 109 interacts with the other functional blocks (modules) in order to operate their functions.

The sub-block 113a is a VM building block from which the profile of the prospective client, in terms of infrastructures and hosted applications intended to be deployed, can be retrieved. From this sub-block 113a the client can either build VMs from scratch by using options offered by the provider of the cloud infrastructure under assessment (this includes: operating systems, versions, applications to install and services to activate) or provide the images of the VMs to be deployed. In the last case, the client authorizes the provider to instantiate the VMs and to install the monitoring agents already mentioned.

For each VM to be deployed data are transmitted to the VM profiler 107. A profile is then obtained by applying the operations previously described with the difference that a profile is not established from a cluster entity but rather for the single user corresponding to the prospective client.

The specific profile of the prospective client that is outputted from the VM profiler 107 is then transmitted to the sixth module described hereafter. In the non-limiting example of the Figure 1 these data transit by the database 112.

The sub-block 113b is responsible for the deployment of VMs should the prospective client finally chose the assessed cloud infrastructure to deploy his virtual infrastructures. It should be noted that, depending on the information the client can obtain from the execution of the method of the invention, he can decide either to complete or to abort the deployment of its virtual machine(s) on the specific cloud infrastructure. In order for the client to be able to make its decision, results can be displayed by the sub-block 113b.

Indeed, the sub-block 113c takes as input the results of the sixth module 110 and is configured to display said results to the customer 101. Based on these results, the customer 101 can also decide to modify the characteristics of the profile he wishes to deploy.

The sixth module 110 is an analysis module whose function, according to the described embodiments, is to establish a diagnosis/output information indicating the most exploited vulnerabilities associated to the specific profile of a client. This can be achieved, for instance, by retrieving the alerts associated to similar already deployed profiles and processing them in order to obtain results such as personalized statistics and recommendations.

This last module can thus be configured to retrieve data from the database that define both the profiles of the already deployed VMs and the alerts that are associated to them, on one hand, and the profile of the VMs intended to be deployed by the prospective client, of the other hand. These profiles include the versions of active services and installed applications. Based on monitored vulnerabilities from machines already deployed in the cloud architecture and having similar profiles, it can process these data to generate output information adapted to the specific profile of the client. These results, which can be, for instance, statistics and recommendations (earlier defined as the results of the sixth module) can be transmitted to the sub-block 113c so that they can be displayed to the customer 101.

The one skilled in the art shall appreciate that, based on the processing of these data by the analysis module 110, several types of statistics can be obtained including, for instance, one or more of:
- the mean time before an attack attempt on the virtual infrastructure associated to the specific profile the prospective client;
- the mean time before an attack compromises this virtual infrastructure;
- the exploitation rate of vulnerabilities with regards to the specific profile; and,
- the vulnerabilities with the highest rate of exploitation with regards to the specific profile.

In addition to the aforementioned output results and personalized statistics, the analysis module can offer recommendations to the prospective clients based on their chosen profile. These recommendations can include, for instance, indications as to how to mitigate said vulnerabilities and/or suggestions of alternative applications and/or services having similar capabilities and being less targeted, that is to say less sensible to potential attacks in the cloud infrastructure.

In particular, in an exemplary embodiment, the process of proposing alternative applications and services rely on using categories and categories profiles. These categories are labels used to classify applications and services according to their purpose (for instance: web server, database...).

To each profile that has been established for a VM already deployed are associated categories (through mapping). More specifically, a categories profile containing categories of active services and installed applications is associated to each VM profile and stored in the database for a later use along with the statistics on vulnerabilities previously determined associated to this profile.

In that configuration, when building their VMs, prospective clients can either:
- choose within applications/services existing in the categories database and proposed by the cloud provider; or,
- provide the categories of unreferenced applications/services to the cloud provider if providing their own images of VMs to be deployed.

These categories profiles can then be used in addition to the process leading to the delivery of output information for evaluating the vulnerabilities of the cloud infrastructure with respect to a client's virtual infrastructure.

Indeed, in that case, within the step of matching profiles of machines expected to be deployed with profiles of machines already deployed, the second ones are only retained if no statistic of theirs are worse than the statistics of the first ones and if at least one of them is better.

The applications and services associated with the retained profiles are then proposed to the prospective clients as potential alternatives to his original ones.

This allow a prospective client to weigh other options in the context of a specific cloud provider and considering his own infrastructure. Based on this information it is possible to choose an alternative VM profile for deployment and/or to modify a specific choice of applications and services.

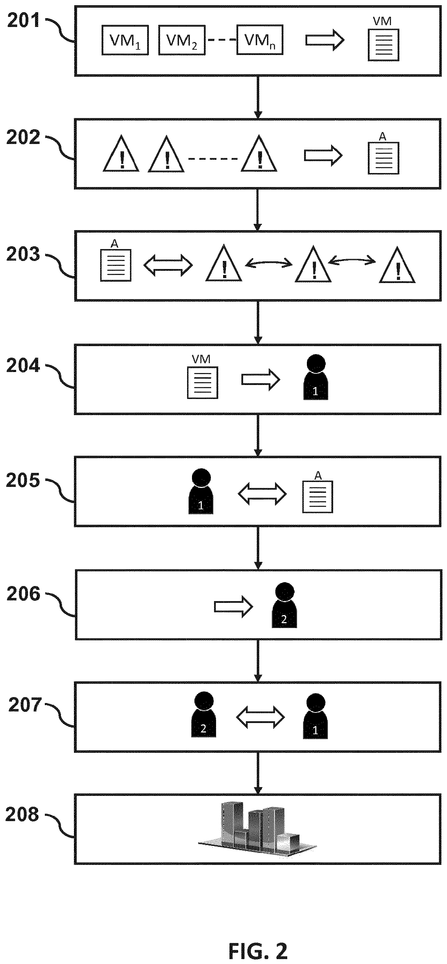

Referring now to Figure 2 there is shown therein a flow chart presenting an embodiment of the steps of the method according to the embodiments of the proposed method. Eight different steps are presented, including:
- a step 201 of collecting information characterizing each already deployed VMs of the cloud infrastructure (operating systems, types of instruction sets, installed services with their versions and categories);
- a step 202 of collecting alerts triggered by attacks against the VMs already deployed in the cloud architecture, and generated by the IDS/IPS;
- a step 203 of sorting the alerts as collected, excluding false attacks and identifying the attacks that did occur, and possibly further grouping the alerts according to, for instance, their types or criticality;
- a step 204 of establishing the profiles of the already deployed VMs through the creation of a list of active service profiles and/or installed application profiles based on the collected information;
- a step 205 of associating the collected alerts with the profiles by pairing elements of the profiles targeted by any specific alerts;
- a step 206 of establishing the profiles of the VMs intended to be deployed by the prospective client (again based on the list of active service profiles and/or installed application profiles associated to the VMs of this client);
- a step 207 of generating output information, for instance, establishing a diagnosis that indicates the most exploited vulnerabilities associated to the specific profile of a client by retrieving the alerts associated to similar profiles of already registered clients and by processing them in order to obtain personalized statistics and recommendations;
- a step 208 of delivering the results of the personalized assessment of vulnerabilities of the cloud architecture to the prospective client.

The one skilled in the art will appreciate that the above steps 201 to 208 shall not necessarily be executed in the order as presented. In particular, the step 206 within which the specific profile of a prospective client is established can be executed any time before executing of step 207.

Thanks to the method and embodiments thereof, it is possible, given a potential user configuration choices, to provide him with the most plausible vulnerabilities that could be exploited, *e.g.* by a fraudulent person, in his virtual infrastructure when set up in specific cloud environment. It also proposes alternative configurations that could be more secure with respect to the cloud infrastructure being assessed.

As opposed to existing solutions that rely on observation of general trends in a large population of users (clients) having different infrastructures and concerns, the proposed method allows addressing needs of specific prospective clients having any individually defined user profile. Before deploying virtual infrastructures on a cloud infrastructure, the prospective clients can thus obtain highly relevant and valuable information regarding their specific exposure to threats associated to this cloud infrastructure and can make decisions of using or not using the architecture based on said personalized information.

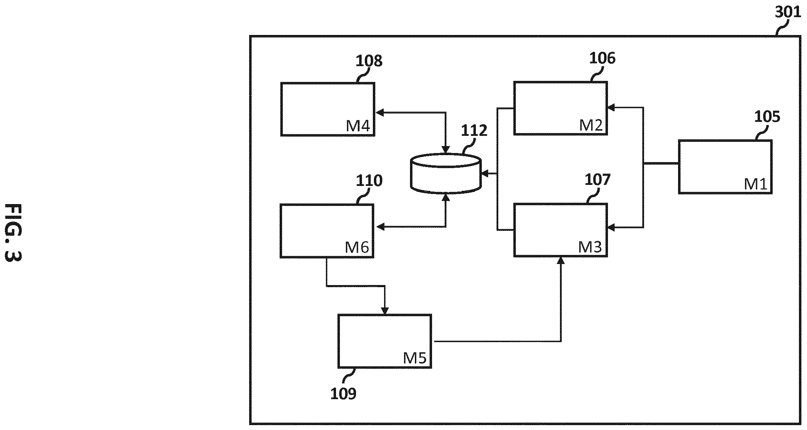

Referring now to Figure 3, there is shown therein a functional blocks description of an embodiment of a device for performing all the steps of the method according to the claimed invention. The device 301 comprises the following modules:
- a monitor agent 105;
- an alerts correlator 106;
- a virtual machine profiler 107;
- an alerts to profile classifier 108;
- a client interface 109;
- an analysis module 110; and,
- a database 112.
as already described with reference to Figure 1.

The present invention can also be embedded in a computer program product, which comprises all the features enabling the implementation of the methods described herein, and which - when loaded in an information processing system - is able to carry out these methods. Computer program means or computer program in the present context mean any expression, in any language, code or notation, of a set of instructions intended to cause a system having an information processing capability to perform a particular function either directly or after conversion to another language. Such a computer program can be stored on a computer or machine readable medium allowing data, instructions, messages or message packets, and other machine readable information to be read from the medium. The computer or machine readable medium may include non-volatile memory, such as ROM, Flash memory, Disk drive memory, CD-ROM, and other permanent storage. Additionally, a computer or machine readable medium may include, for example, volatile storage such as RAM, buffers, cache memory, and network circuits. Furthermore, the computer or machine readable medium may comprise computer or machine readable information in a transitory state medium such as a network link and/or a network interface, including a wired network or a wireless network, that allow a device to read such computer or machine readable information.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed in reference to the plural and vice versa.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the inventive concept described herein. Furthermore, an embodiment of the present invention may not include all of the features described above. Therefore, it is intended that the present invention not be limited to the particular embodiments disclosed, but that the invention include all embodiments falling within the scope of the appended claims.

A person skilled in the art will readily appreciate that various parameters disclosed in the description may be modified and that various embodiments disclosed and/or claimed may be combined without departing from the scope of the invention.

It is stipulated that the reference signs in the claims do not limit the scope of the claims, but are merely inserted to enhance the legibility of the claims.

## Claims

1. A method of assisting a prospective client in evaluating exploitation vulnerabilities of a cloud infrastructure, said vulnerabilities corresponding to threats to which said prospective client would be exposed by deploying a client's virtual infrastructure, including at least one client's virtual machine, on said cloud infrastructure, said method comprising:
- collecting information characterizing each one of a plurality of virtual machines already deployed on the cloud infrastructure, said information including at least an operating system, a type of instruction set of the processor executing the operating system, and services as well as associated service versions and service categories;
- establishing first profiles of the already deployed virtual machines based on the collected information, said first profiles comprising active service profiles and/or installed application profiles;
- collecting alerts triggered by attacks against the already deployed virtual machines and generated by at least one intrusion detection and prevention system;
- sorting the collected alerts based on information related to said alerts as generated by the intrusion detection and prevention system;
- associating the collected alerts with the first profiles of the already deployed virtual machines targeted by attacks from which said alerts have been triggered, by matching elements of said first profiles with the information related to the alerts;
- establishing second profiles of at least one client's virtual machine which is intended to be deployed by the prospective client on the cloud infrastructure, said second profiles comprising active service profiles and/or installed application profiles;
- establishing output information useful to the prospective client for evaluating the vulnerabilities of the cloud infrastructure with respect to the client's virtual infrastructure expected to be deployed on said cloud infrastructure, by retrieving alerts associated to first profiles similar to the second profile and processing said associated alerts;
- delivering said output information to the prospective client.

2. The method of Claim 1 wherein the output information comprises at least some of personalized statistics, personalized recommendations, indications as to how to mitigate said vulnerabilities, and suggestions of alternative applications and/or alternative services less impacted by vulnerabilities of the cloud infrastructure.

3. The method of Claims 1 and 2 wherein alerts are expressed in an alert format comprising at least some of:
- a unique identifier;
- a virtual machine identifier in the cloud;
- a client identifier;
- a timestamp;
- a service identifier;
- a service version; and,
- an exploited attack of vulnerability identifier.

4. The method of any one of Claims 1 to 3 wherein the at least one intrusion detection and prevention system is installed in the cloud architecture by the prospective client.

5. The method of any one of Claims 1 to 3 wherein the at least one intrusion detection and prevention system is installed in the cloud architecture by the cloud provider.

6. The method of any one of Claims 1 to 5 wherein establishing first profiles of the already deployed virtual machines comprises:
- organizing the virtual machines in initial clusters according to their respective operating systems and type of instruction sets of the processors executing the operating systems;
- processing each said initial cluster using a clustering method that outputs, for each initial cluster, sets of outputted clusters based on active services and installed applications; and,
- processing said outputted clusters using a Frequent Item Set (FIS) mining method based successively on the active services and on the installed applications associated with the client's virtual machines.

7. The method of Claim 6 wherein the clustering method being used to process each initial cluster comprises:
- formatting the virtual machines into an exploitable dataset by associating one vector to each virtual machine (VM), each column of the vector representing a service or an application; and,
- applying on said exploitable dataset a clustering algorithm being either a K-mean or a HCPC algorithm.

8. The method of Claims 6 and 7 wherein the FIS mining method used to process the outputted clusters comprises:
- defining each outputted cluster as a cluster entity; and,
- associating each virtual machine within each cluster entity with two classes of transactions: active services transactions or installed applications transactions wherein items of the method are respectively active services and installed applications.

9. The method of Claim 8 wherein the FIS mining method is performed by using a Frequent Pattern Growth algorithm.

10. The method of any one of Claims 1 to 9 wherein the elements of the first profiles which are matched with the information related to the alerts for associating said alerts with said first profiles comprise at least services and/or applications.

11. The method of any one of Claims 1 to 10 wherein the user profile of the prospective client corresponding to at least infrastructures and applications intended to be deployed by said prospective client comprises virtual machines and is retrieved after said prospective client has either:
- built said virtual machines by using options offered by a cloud provider of said cloud infrastructure; or,
- provided images of said virtual machines to be deployed to the provider.

12. The method of any one of Claims 1 to 11 wherein the personalized statistics of the output information at least comprise:
- the mean time before an attack attempt on the virtual infrastructure associated to the specific profile of the prospective client;
- the mean time before an attack compromise this virtual infrastructure;
- the exploitation rate of vulnerabilities with regards to the specific profile;
- the vulnerabilities with the highest rate of exploitation with regards to the specific profile.

13. The method of any of Claims 11 and 12 further comprising:
- establishing categories profiles associated to first profiles containing categories of installed applications and/or active services corresponding to installed applications and active services comprised in said first profiles;
- when building the user profile, the prospective client has either:
- chosen within installed applications and/or active services having their categories already defined by the cloud provider; or,
- provided the categories of the installed applications and/or active services to the cloud provider.
- when establishing output information by retrieving alerts associated to first profiles similar to the second profile:
- only retaining first profiles based on predetermined conditions on statistics corresponding to them; and,
- proposing installed applications and/or active services comprised in the retained first profiles to the prospective client.

14. A device for assisting a prospective client in evaluating exploitation vulnerabilities of a cloud infrastructure, said vulnerabilities corresponding to threats to which said prospective client would be exposed by deploying a client's virtual infrastructure, including at least one client's virtual machine, on said cloud infrastructure, said device comprising at least one monitor agent (105), an alerts correlator (106), a virtual machine profiler (107), an alerts to profile classifier (108), a client interface (109), an analysis module (110) and a database (112) adapted to perform the following:
- collecting information characterizing each one of a plurality of virtual machines already deployed on the cloud infrastructure, said information including at least an operating system, a type of instruction set of the processor executing the operating system, and services as well as associated service versions and service categories;
- establishing first profiles of the already deployed virtual machines based on the collected information, said first profiles comprising active service profiles and/or installed application profiles;
- collecting alerts triggered by attacks against the already deployed virtual machines and generated by at least one intrusion detection and prevention system;
- sorting the collected alerts based on information related to said alerts as generated by the intrusion detection and prevention system;
- associating the collected alerts with the first profiles of the already deployed virtual machines targeted by attacks from which said alerts have been triggered, by matching elements of said first profiles with the information related to the alerts;
- establishing second profiles of at least one client's virtual machine which is intended to be deployed by the prospective client on the cloud infrastructure, said second profiles comprising active service profiles and/or installed application profiles;
- establishing output information useful to the prospective client for evaluating the vulnerabilities of the cloud infrastructure with respect to the client's virtual infrastructure expected to be deployed on said cloud infrastructure, by retrieving alerts associated to first profiles similar to the second profile and processing said associated alerts;
- delivering said output information to the prospective client.

15. The device of Claim 14 wherein the device is further configured to perform the following:
- establishing categories profiles associated to first profiles containing categories of installed applications and/or active services corresponding to installed applications and active services comprised in said first profiles;
- when building the user profile, the prospective client has either:
- chosen within installed applications and/or active services having their categories already defined by the cloud provider; or,
- provided the categories of the installed applications and/or active services to the cloud provider.
- when establishing output information by retrieving alerts associated to first profiles similar to the second profile:
- only retaining first profiles based on predetermined conditions on statistics corresponding to them; and,
- proposing installed applications and/or active services comprised in the retained first profiles to the prospective client.

16. A computer program product comprising one or more stored sequences of instructions that are accessible to a processor and which, when executed by the processor, cause the processor to carry out any of the steps of the method of any one of Claims 1 to 13.
